# EUROPEAN PATENT APPLICATION

(11) **EP 1 900 700 A1**
(43) Date of publication of application: **19.03.2008**
(21) Application number: 07475002.7
(22) Date of filing: 31.01.2007
(51) Int. Cl.: C04B 7/147, C04B 7/38

(54) **Method for production of Portland clinker using alternative raw material especially crystalline blast-furnace slag**

(30) Priority: 18.09.2006 SK 50762006
(71) Applicant: Východoslovenské stavebné hmoty, a.s., 044 02 Turna nad Bodvou (SK)
(72) Inventor: Jaklovský, Stefan, 044 24, Popro? (SK); Palou, Martin, 811 01, Bratislava (SK)
(74) Representative: Majlingova, Marta

(57) **Abstract**

Method of Portland clinker production where the cement raw material mixture such as limestone, ferrous ingredient and clays are grinded together to such fineness that the residue on sieve 009 is maximum of 25 % by weight and separately the crystalline blast-furnace slag is grinded to the same fineness as the cement raw materials do and grinded mixture of cement raw materials proceeds to the high-capacity mixer where it is blended with grinded crystalline blast-furnace slag in amount up to 35 % by weight of grinded crystalline blast-furnace slag until the homogenous mixture is obtained and subsequently the homogenous feedstock powder proceeds through the homogenization silo and storage silo into the heat exchangers system, in which this feedstock powder is pre-heated and the most finest portions of the feedstock powder - dusts are separated, which have the same chemical composition as the feedstock material proceeding to the rotary kiln for Portland clinker production whereas the amount of the grinded crystalline blast-furnace slag depends on the overall MgO content in the feedstock powder.

## Description

### Field of the invention

This invention relates to the manufacture of Portland clinker on the basis of natural and alternative raw materials, in a short rotary kilns equipped with four or five stage heat-exchanger cyclones.

This invention also relates to the method of preparation of cement raw material mixture containing artificial metallurgical aggregate of the blast-furnace slag (further only AMA-BFS).

This invention provides for a method of using crystalline blast-furnace slag as an alternative raw material in the Portland clinker production.

### State of the art

Cement is a hydraulic binder, i.e. a finely ground inorganic material which, when mixed with water, forms a paste which sets and hardens by means of hydration reactions and process and which, after hardening, retains its strength and stability even in water. Clinker can be silicate or high-aluminate.

The main compounds of the Portland clinker are tricalcium silicate, dicalcium silicate, tricalcium aluminate and tetracalcium aluminoferrite that, with gypsum as setting regulator, assure hydration characteristics and mechanical properties of final products.

The fundamental principle of cement manufacturing process consists of the thermal conversion of natural minerals in raw mixture into phases which spontaneous potential to react with water, thus resulting in the formation of hydrated phases with a new microstructure that guarantees physical and mechanical properties of cement paste.

In principle, it is the change of the microstructure at the expense of energy that is released as a hydration heat during setting and hardening of cements.

The minerals of the feedstock raw meal are thermally decomposed in the cement kiln into silica, alumina, calcium and iron oxides. These oxides react to form new phases so-called clinker minerals, which after cooling conserve certain "energetic content" and thus specific property to react with water.

Therefore the primary objectives of the cement manufacturers is to reach such a clinker phase composition providing for required properties of cement as final product with minimal energy consumption. This procedure that is called "optimization of chemical technology" of the cement production resides in searching for the most convenient chemical composition, degree of grinding of the feedstock powder and such burning equipment that minimize energy and production costs.

Feedstock of raw meal powder consists of particles of natural minerals with various chemical composition that in certain volume constitute chemical composition of the clinker. The smaller are these particles and the better they are blended, the easier are formed clinker minerals.

If the final analytical composition of raw meal is decisive for the combination of raw material components, its texture determined by mineralogical composition of each compound used in individual cement plant has an important influence upon the reactivity of feedstock. Clinker with identical oxide composition can be burned easier in some factories than in other, therefore with complied identical performances and identical equipments, clinker produced in factories using more reactive raw materials will be of higher quality.

In addition to the influences of the quality of raw material source, the chemical and granulometrical composition (degree of grinding) of the feedstock powder has a substantial influence on its reactivity and therefore the degree of grinding and homogenizing preparation of the feedstock powder in the factory has a significant influence on the energy expenditure.

Raw materials for Portland cement production can be divided into primary and accessory ones:
1. The primary raw materials necessary for the formation of clinker minerals are :
   - Main raw materials: limestone, marly limestone, clays, sialitic chalk, clays
   - Auxiliary or corrective raw materials: siliceous sand, iron-stone, bauxite,
2. The accessory raw materials are:
   - Setting regulator as gypsum, anhydride
   - Mineralising agent of clinker
   - Grinding intensifier

Once the basic composition of feedstock has been set according to well-known principle, the raw mixture is ground, mixed and homogenised, and then heated at temperature about 1450 °C. The principle parameters are the lime saturation factor (LSF), the silica ratio or modulus (SR) and the alumina ratio or modulus (AR).

With the gradual increasing temperature from cyclone to rotary kiln, water is removed from feedstock; the humidity is approximately 2 % by weight at the dry process, 12 to 13 % by weight at semi dry process and 30 to 40 % by weight at wet process. Drying is completed at temperatures about 200 °C. Important processes for clinker mineral formation start at higher temperatures.
- Decomposition of solid substances (dehydration of clay minerals, decarbonation of limestone)
- Inter-reactions of components in solid state
- Eutectics, dissolution of solid substances in melts

In the steel production the blast furnace batch contains in addition to the iron core also certain amount of admixtures (mainly gangue- siliceous sand, clay, carbohydrates, sulphur and phosphorus mixtures and similar) and fluxing stone At the temperatures about 1880 °C fluxing stone (limestone or dolomite) react with gangue components and inorganic components of fuel and form liquid iron blast-furnace slag consisting of silicates and calcium, and magnesium aluminosilicates floating on the pool of iron. The density, porosity and physical structure of the cooled and solidified slag, as well as the chemistry thereof are closely dependent on the rate at which the molten material is cooled when it comes from the furnace.

Through the very fast cooling (rapid quenching) of the molten slag, a by-product, granulated (glassy) blast-furnace slag is obtained, that is for many years without any major problems utilised in the full extent as a latently hydraulic compounds in the production of blended cements.

Crystalline blast-furnace slags so called artificial metallurgical slag aggregate from blast-furnace (AMSA-BF ) are obtained through the slow cooling of the molten on the air. These are generally used in concrete production and are also suitable for use in road constructions. They are conglomerates of various stable crystalline phases joined with a small amount of glassy phase with unstable composition. They do not have hydraulic properties but they can be used as a raw material component in the Portland cement production.

In the present case, the term "(AMSA-BF) " will be used hereafter to designate only "air-cooled blast-furnace slag" and not granulated blast-furnace slag.

Alkaline blast-furnace slags have different composition, which depends on the raw material composition of the starting mixture. Their chemical composition is similar to that of Portland cement however they have lower CaO content (30 to 50%) and higher content of SiO₂, Al₂O₃ (5 to 33%)and MgO (6 to 21%).

The present crystalline blast-furnace slag is ground together with limestone to certain fineness and subsequently the particle size distribution is performed. The analytical chemical composition changes with granulometry as the grindability of individual components differs. Therefore an inhomogeneity in the chemical composition at different granulometry occurs.

**Table 1 Chemical composition of cement raw material components**

| Composition wt. % | Limestone | Clay | Ferrous ingredient | AMSA-BF |
|---|---|---|---|---|
| CaO | 54.08 | 1.12 | 15.10 | 38.66 |
| SiO₂ | 1.68 | 68.88 | 3.08 | 40.3 |
| Al₂O₃ | 0.69 | 16.35 | 1.24 | 7.57 |
| Fe₂O₃ | 0.22 | 4.64 | 69.82 | 0.67 |
| MgO | 0.59 | 0.93 | 3.60 | 9.42 |
| SO₃ | 0.04 | 0.00 | 0.34 | 0.6 |
| Na₂O | 0.02 | 0.66 | 0.29 | 0.58 |
| K₂O | 0.05 | 0.18 | 0.18 | 0.53 |

Grindability is defined as a numerical indication of the ability of solid materials to be mechanically pulverized or ground under standard conditions. It is expressed as a growth of specific surface as function of energy of grinding work unit that is expressed as an expenditure of power for grinding of one ton of material. Apart from the electrical energy expenditure it is necessary to refer to the granulometrical composition of the feedstock powder that has fundamental influence on its reactivity in the clinkering reaction. Non-proportional size distribution of the particles of individual compounds to the raw material mixture influences the uniformity of the chemical composition and thus the homogenization of the feedstock powder. Therefore it is also from this aspect necessary to carefully and in the long-term study the influence of the quantity of the crystalline blast-furnace slag being added into the feedstock mixture on the physical and chemical properties of clinker and consecutively on cement technological properties.

When limestone, clay and AMAS-BS were mixed and ground in the requisite proportion, the chemical composition changes with particle size distribution as the grindability of each component greatly differs. This method of preparation led to the non-uniformity of chemical composition along the particle distribution as the limestone and clays are finely ground and are concentrated in finer particle-size part, while AMAS-BS remanded accumulated in coarser part of feedstock.

The disadvantage of the present method is that the feedstock raw meal entering into the rotary kiln after separation of the fine portion has a different chemical composition as original feedstock, see Table No. 2. Further, reactivity of the feedstock material entering into the rotary kiln is worth because of the crystalline blast-furnace slag content that is a less active component. The reactivity of the feedstock mixture entering into the rotary kiln is worth also because of the granulometrical composition.

**Table No. 2: Chemical composition and characteristics of powders after separation by hot-air blast of combustion.**

| | CaO | SiO₂ | Al₂O₃ | Fe₂O₃ | SO₃ | MgO | Na₂O | K₂O | LSF | SM | AM |
|---|---|---|---|---|---|---|---|---|---|---|---|
| SMP0 | 41.97 | 12.38 | 3.88 | 2.19 | 0.06 | 0.92 | 0.11 | 0.60 | 1.03 | 2.04 | 1.88 |
| SMP1 | 34.99 | 12.10 | 3.16 | 1.86 | 1.37 | 1.23 | 0.1 | 0.5 | 0.90 | 2.42 | 1.70 |
| Odl2 | 38.14 | 9.84 | 3.91 | 2.21 | 0.20 | 0.70 | 0.138 | 1.21 | 1.136 | 1.61 | 1.77 |

| | | | | | | | | | | | |
|---|---|---|---|---|---|---|---|---|---|---|---|
| Abbreviations interpretation: SMP0 - original feedstock powder, SMP1 - feedstock powder entering into the - rotary kiln, Odl2 - separated dust from original feedstock powder by hot-air blast. | | | | | | | | | | | |

Disadvantages of the prior art production method can be summarized up in the following points:
- Separation of the fine portion from the feedstock powder;
- Change of the chemical composition of the kiln powder;
- Change of the clinker's mineralogical composition;
- Low initial strength;
- Reduced performance of the raw material mill and increased energy consumption;
- Increased service/maintenance expenses resulting from the increased wear-out of the technical apparatus.

SK Patent No. 283257 discloses a method of cement clinker manufacture using a long rotary cement kilns, either wet or dry, wherein the blast-furnace slag is added at the input-end of the kiln with a stream of the feedstock material. Air cooled blast-furnace slag is crushed and screened to obtain the particle sizes having a predominant particle sizes with a maximum diameter of substantially 51 mm. Such crushed and screened air-cooled blast-furnace slag is added into the stream of the feedstock material at the input-end of the kiln. Blast-furnace slag can be added to the kiln as a separate component separated from other feedstock material or before entering into the feed-end of the kiln it can be mixed with feedstock material.

The disadvantage of the method disclosed in SK 283 257 is that it is suitable only for a long rotary kiln without heat exchangers. Components mixing up according to said invention does not provide for homogenization of the slag with the feedstock material. Further disadvantage is that large fractions of the slag after melting inside the rotary kiln coat the grains of the burned lime and thus limit the reaction of the clinker minerals formation. Granulometry of the slag is not compatible with the granulometry of the mixture of limestone and clays and thereby the reactivity of the raw materials mixture is debased thus influencing the quality of the final product.

Method of cement clinker production according to SK 282 196 shows the same disadvantages as SK 283 257 do.

US 6,740,157 discloses a method of the cement clinker production, where the granulated glassy slag is utilized. This slag is added into the clinker zone of the cement kiln.

### Interpretation of terms used:

Grounded cement raw materials mixture is the mixture of limestone, ferrous ingredient and clays, in the determined ratio, grinded into such fineness that the residue on the screen 009 (length of the mesh side is 0.09 mm) is maximum 25 % by weight.

Grinded crystalline blast-furnace slag is a crystalline blast-furnace slag grounded into such fineness that the residue on the screen 009 (length of the mesh side is 0.09 mm) does not exceed 25 weight %.

Feedstock mixture is a mixture of grinded cement raw materials mixture and grinded crystalline blast-furnace slag in the determined ratio up to the maximum crystalline blast-furnace slag content of 35 % by weight depending upon the permissible maximal content of MgO.

Kiln feedstock powder is a feedstock powder deprived of the finest fractions - dusts that have however substantially the same chemical composition as the kiln feedstock powder does.

### Summary of the invention

Described disadvantages of the state of the art methods of Portland clinker production using alternative raw material, in particular blast-furnace slag are removed by the solution according to the present invention, the subject-matter of which is that the mixture of cement raw materials such as limestone, ferrous ingredient and clays are grinded together to a such fineness that the residue on the sieve 009 is maximum 25 % by weight and the crystalline blast-furnace slag is grinded separately to the same fineness as the cement raw materials and the grinded mixture of cement raw materials is carried out to the high-capacity blender where it is blended together with grinded crystalline blast-furnace slag in amount up to 35 % by weight of a grinded blast-furnace slag until the homogenous mixture is formed and subsequently the homogenous raw materials mixture proceeds through the homogenization silo and storage silo into the heat exchangers system, in which this feedstock powder is pre-heated and thus the finest fractions of the feedstock - dusts are separated, which are of the substantially same chemical composition as the kiln feedstock powder proceeding to the rotary kiln for Portland clinker production, whereas the amount of the grinded crystalline blast-furnace slag depends from the total content of MgO in the feedstock powder.

An important feature of this invention is the identity of the crystalline blast-furnace slag granulometry and granulometry of other Portland clinker raw materials and their homogenization in the mixer positioned before the homogenization silo in order to obtain high quality Portland clinker in a short rotary kiln with four-stage or five-stage cyclone heat exchanger. Homogeneity of raw materials has a great influence on the formation of a high quality clinker, whereas the homogenization silo has a limited ability of raw materials homogenization and therefore it is necessary that the raw materials grinded to the same fineness are blended beforehand in order to form a homogenous mixture.

This invention enables to add a crystalline blast-furnace slag into the cement raw material mixture and thus substitute the cement raw material mixture based on natural raw materials up to the amount of 35 % by weight. Maximum amount of the grinded crystalline blast-furnace slag to be added depends on the MgO content in the feedstock powder.

Considering the grindability of the crystalline blast-furnace slag, separate grinding enables to grind this slag to the fineness of the cement raw materials, what enables to keep up or increase the capacity of the raw material grinder.

Reasons for which it is convenient to use the crystalline blast-furnace slag in the Portland clinker production are in particular following:
1. Disposal of industrial wastes
2. Utilisation of alternative raw materials
3. Reduction of CO₂ emissions
4. Energy savings at the limestone decomposition

This energy balance can be more complex when the transport and grinding of slag are considered.

Problems that can arise with using the crystalline blast-furnace slag in the Portland clinker production are in particular reactivity of the raw material mixture containing crystalline blast-furnace slag, oxides are chemically bound in minerals and thus are not disintegrated during the thermal processing of feedstock.

If the raw material mixture is not homogenous from the granulometrical and chemical composition point of view, then the characteristics (LSF -Lime saturation according to Lee Parker, SM - silicate modulus, AM - aluminate modulus) of the kiln feedstock raw meal powder entering into the rotary kiln after separation of the finest particles (dusts) can change. The result is the change of the chemical and mineralogical composition of the feedstock powder and consecutively modification of the properties of clinker.

The aim of the present invention is to provide for the homogeneity of the raw material mixture in respect of the chemical and granulometrical composition of the feedstock raw meal powders in view of the grindability of the crystalline blast-furnace slag, limestone, clay and ferrous ingredient, chemical composition of the raw material mixture changes with the granulometrical composition. Further aim of this invention is to provide for the reactivity of the raw material mixture containing blast-furnace ballast. Raw material components are more active after decomposition and react better.

The main minerals in the slowly cooled acidic blast-furnace slags - crystalline blast-furnace slags are anortite CaO.Al₂O₃.2SiO₂ (CAS₂) and diopside CaO.MgO.2SiO₂ (CMS₂). In neutral and alkaline slags in particular gelenit 2CaO.Al₂O₃.SiO₂ (C₂AS), akermanite 2CaO.MgO.2SiO₂ (C₂MS₂), melilite (solid solution of gelenite with akermanit), merwinite 3CaO.MgO.2SiO₂ (C₃MS₂), wollastonite β-CaO.SiO₂ (β-CS), pseudowollastonite α-CaO.SiO₂ (α-CS), belite β-2CaO.SiO₂ (β-C₂S), montichelite CaO.MgO.SiO₂ (CMS), magnesious spinel MgO.Al₂O₃ (MA) and other are found. These minerals react with calcium oxide under formation of 3CaO.SiO₂ = C₃S, 2CaO.SiO₂ = C₂S, 3CaO.Al₂O₃ = C₃A a 4CaO.Al₂O₃.Fe₂O₃ = C₄AF in the burning zone of the rotary kiln.

Blast-furnace crystalline slag (further only slag) is separately ground to the same fineness as that of mixture of limestone, ferrous ingredient and clays. This procedure provides for the uniformity of the granulometrical and chemical composition of the feedstock powder entering into the rotary kiln with initial one.

After separate grinding of the crystalline blast-furnace slag and separate grinding of the mixture of limestone, clays and ferrous ingredient these two mixtures are then homogenized in a separate blending apparatus - high capacity mixer before entering into homogenization silo, storage silo and kiln system through the cyclone heat exchangers.

Homogenized feedstock powder is not divided by the exhaust gas of hot-air blast of combustion gases from the rotary kiln in the cyclone heat exchangers in two parts with the different chemical composition as the homogenized raw material powder has a uniform granulometry. Both fluxes, the kiln feedstock powder entering into the rotary kiln (MP1) as well as dusts led out of the cyclone heat exchanger system (Odl2) have substantially the same chemical and mineralogical composition.

Slag grinding is performed in a separate grinding installation what does not reduce the capacity of the raw material mill and consecutively does not influence the capacity of the rotary kiln.

Melted slag does not coat grains of burned lime but they are evenly spread in the feedstock powder and thus better react with other clinker-forming oxides. Clinker is of a high quality.

### Brief description of the drawings

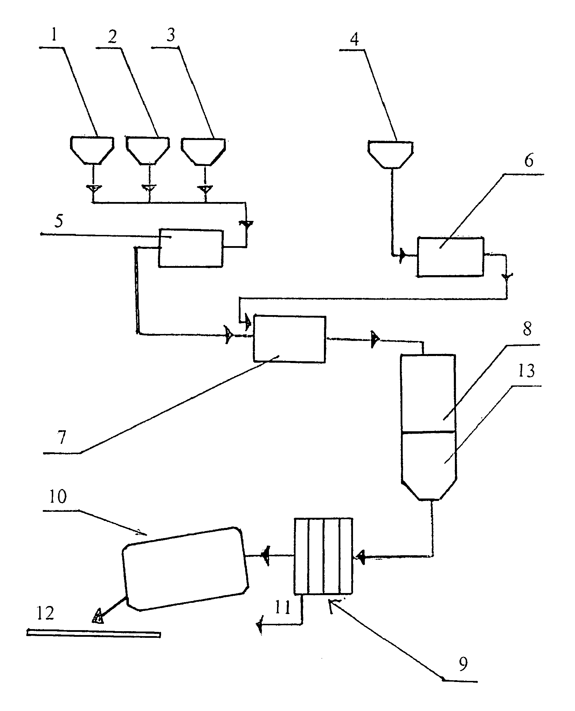

In the attached drawing the apparatus through which the method of Portland clinker production can be obtained is illustrated.

### Examples of preferred embodiments of the invention

### Preparation of the raw material mixture

Cement raw material mixture (limestone, clays, ferrous ingredient) is dosed from the cartridges 1 to 3, wherein reference number 1 refers to the limestone cartridge 1, cartridge with reference number 2 is the clay cartridge 2 and cartridge with reference number 3 is the ferrous ingredient cartridge, in the determined amount they are carried to the mill 5 for cement raw materials grinding to the fineness 14 % by weight of the residue on sieve 009. Length of the mesh of sieve 009 is 0.09 mm. Crystalline blast-furnace slag stored in the slag cartridge 4 is separately grinded in the slag meal 6 to the fineness 14 % by weight of the residue on the sieve 009. Both feedstocks of raw materials, grinded cement raw materials mixture as well as grinded slag can show the residue on the sieve 02 up to 3 % by weight. Length of the mesh of sieve 02 is 0.2 mm.

Crystalline blast-furnace slag grinded in a separate slag mill 6 into required fineness is added to the cement raw materials mixture (limestone, clays, ferrous ingredient), grinded in the cement raw material mixture mill 5 to the same granulometry, allows to add up to 35 % by weight of the crystalline blast-furnace slag into the cement raw material mixture.

Homogenization of the cement raw material mixture (limestone, clays, ferrous ingredient) and grinded crystalline blast-furnace slag is preformed in a high capacity mixer 7 and consequently the feedstock stream move ahead to the homogenization silo 8 and storage silo 13.

Feedstock powder that is formed by blending of the grinded cement raw material mixture and grinded crystalline blast-furnace slag in the high capacity mixer 7 is carried out by the bucket elevator to the homogenization silo 8. Through homogenization formed feedstock powder is homogenous from granulometric (granularity), chemical and mineralogical aspect. This feedstock powder is transported by the elevator to the heat exchanger 9, where it is heated to the temperature about 800 °C countercurrent-wise by the hot-air. Kiln system consists of four or five stage cyclone heat exchanger 9, short rotary kiln 10 and grade cooler 12.

In the heat exchangers 9 the feedstock powder is deprived of physically and chemically bound water and by the countercurrent heat exchange of the combustion gasses from the rotary kiln 10 the separation of the finest particles - dusts takes place and proceed to the rotary kiln that is divided into calcination and burning zone. In the calcination zone the limestone is decomposed to the calcium oxide CaO and carbon dioxide CO₂. Calcium oxide enters into the solid-phase reaction with other clinkering oxides (siliceous oxide SiO₂, aluminium oxide Al₂O₃ and ferric oxide Fe₂O₃) in the burning zone. Heat process results in the formation of main clinker minerals (3CaO.SiO₂ = C₃S, 2CaO.SiO₂ = C₂S, 3CaO.Al₂O₃ = C₃A a 4CaO.Al₂O₃.Fe₂O₃ = C₄AF) in the burning zone at the temperature about 1450 °C.

Burned clinker leaves the burning zone and enters into the cooling zone where the Portland clinker is cooled and then it is transported into the clinker silo for further processing.

Crystalline blast-furnace slag melts very good in the rotary kiln 10 and reacts with other compounds to form clinker minerals. Reactivity of the feedstock powder containing crystalline blast-furnace slag grinded to the fineness of the maximal residue on the screen 009 to 25 % by weight is comparable with the reactivity of the traditional feedstock powder without slag added thereto, when processed on the same apparatus.

Properties of the clinker burned out from the feedstock powder according to this invention are comparable with those of the clinker burned out of the traditional feedstock powder on the same apparatus.

In the following Tables 1 to 7 properties and chemical composition of all raw materials used in the example as well as properties of the clinker produced are illustrated.

**Table No. 3: Physically-chemical characteristics of the raw material components used / %**

| | Humidity | CaO | SiO₂ | Al₂O₃ | Fe₂O₃ | SO₃ | MgO | Na₂O | K₂O |
|---|---|---|---|---|---|---|---|---|---|
| Clays | 13.32 | 0.93 | 62.52 | 16.24 | 7.14 | 0.004 | 1.02 | 0.403 | 2.405 |
| Limestone | 1.99 | 52.40 | 2.402 | 1.152 | 0.515 | 0.049 | 0.353 | 0.006 | 0.093 |
| AMAS-BS | 1.69 | - | 37.99 | 41.58 | 7.36 | 0.58 | 0.48 | 9.37 | 0.467 |
| Ferrous ingredient | 15.62 | 13.18 | 2.65 | 0.54 | 70.64 | 0.38 | 3.90 | 0.435 | 0.305 |

**Table No. 4: Chemical composition of the feedstock powder (SM) and kiln powder (PM) and clinker (S)/ %.**

| | CaO | SiO₂ | Al₂O₃ | Fe₂O₃ | SO₃ | MgO | Na₂O | K₂O | Cl |
|---|---|---|---|---|---|---|---|---|---|
| SM | 45.75 | 14.30 | 3.72 | 2.39 | 0.267 | 1.990 | 0.035 | 0.337 | 0.008 |
| PM | 45.62 | 14.11 | 3.57 | 2.36 | 0.265 | 1.967 | 0.033 | 0.351 | 0.008 |
| S | 65.73 | 21.44 | 5.12 | 3.29 | 0.386 | 2.92 | 0.447 | 0.121 | 0.003 |

**Table No. 5: Feedstock powder (SM) and kiln powder (PM) characteristics.**

| | KS | MS | MA | Fineness % | |
|---|---|---|---|---|---|
| | | | | 02 | 009 |
| SM | 99.26 | 2.36 | 1.55 | 1.49 | 12.87 |
| PM | 100.77 | 2.37 | 1.52 | | |

**Table No. 5: Clinker mineralogical composition and characteristics**

| | KS | MS | MA | Free Lime / % | C₄AF /% | C₃A/% | C₂S/% | C₃S/% | Content Cr⁶⁺ mg/kg |
|---|---|---|---|---|---|---|---|---|---|
| | 96.37 | 2.55 | 1.55 | 0.78 | 10.0 | 8.0 | 12.2 | 65.8 | 1.7 |

**Table No. 6: Physically-chemical characteristics of the clinker produced**

| Fineness / % | | | Solidifying /hour | | | Solidity / MPa | | | | | | Mass by liter g/l | Soudness mm |
|---|---|---|---|---|---|---|---|---|---|---|---|---|---|
| Blaine m²/kg | Residue on the sieve | | Water consumption / % | Beginning | Period | 1-day | | 2-days | | 28-days | | | |
| | 02 | 009 | | | | Q1 | T₁ | Q₂ | T₂ | Q₂₈ | T₂₈ | | |
| 300 | 1.27 | 6.85 | 24.9 | 2:59 | 4:09 | 3.70 | 12.8 | 5.42 | 20.9 | 10.18 | 53.7 | 1406 | 4.29 |

| | | | | | | | | | | | | | |
|---|---|---|---|---|---|---|---|---|---|---|---|---|---|
| Q is flexural strength and T is compressive strength | | | | | | | | | | | | | |

## Claims

1. Method of Portland clinker production using alternative raw material, in particular crystalline blast-furnace slag, in short rotary kiln with the heat exchangers system, including preparation of the raw material mixture by grinding and burning of the raw material mixture **characterized in that** the cement raw material mixture such as limestone, ferrous ingredient and clays are grinded together to such fineness that the residue on sieve 009 is maximum of 25 % by weight and separately the crystalline blast-furnace slag is grinded to the same fineness as the cement raw materials do and grinded mixture of cement raw materials proceeds to the high-capacity mixer where it is blended with grinded crystalline blast-furnace slag in amount up to 35 % by weight of grinded crystalline blast-furnace slag until the homogenous mixture is obtained and subsequently the homogenous feedstock powder proceeds through the homogenization silo and storage silo into the heat exchangers system, in which this feedstock powder is pre-heated and the most finest portions of the feedstock powder - dusts are separated, which have the same chemical composition as the feedstock material proceeding to the rotary kiln for Portland clinker production whereas the amount of the grinded crystalline blast-furnace slag depends on the overall MgO content in the feedstock powder.
